(19) Europäisches Patentamt
European Patent Office
Office européen des brevets

(11) Veröffentlichungsnummer: **0 252 387 B1**

# (12) EUROPÄISCHE PATENTSCHRIFT

(45) Veröffentlichungstag der Patentschrift: **11.03.92**

(51) Int. Cl.[5]: **C08G 18/62**, C08G 18/65, C08L 75/04, C08L 23/00

(21) Anmeldenummer: **87109230.0**

(22) Anmeldetag: **26.06.87**

## (54) Verwendung von Poly-alpha-olefin-/Polyurethan-Blockcopolymeren als Dispergatoren und Haftvermittler zur Herstellung von Polymerblends.

(30) Priorität: **08.07.86 DE 3622825**

(43) Veröffentlichungstag der Anmeldung:
**13.01.88 Patentblatt 88/02**

(45) Bekanntmachung des Hinweises auf die Patenterteilung:
**11.03.92 Patentblatt 92/11**

(84) Benannte Vertragsstaaten:
**BE DE FR GB IT NL**

(56) Entgegenhaltungen:
**DE-A- 2 309 508**
**DE-A- 2 361 507**
**DE-A- 2 819 492**
**US-A- 3 272 890**
**US-A- 3 857 826**

**JOURNAL OF APPLIED POLYMER SCIENCE, Band 31, Nr. 8, Juni 1986, Seiten 2523-2532, New York, US; T. MIYABAYASHI et al.: "Characterization of polyisobutylene-based model urethane networks"**

**PATENT ABSTRACTS OF JAPAN, Band 10, Nr. 161 (C-352)[2217], 10. Juni 1986; & JP - A - 61 14222 (ASAHI KASEI KOGYO K.K.) 22.01.1986**

**D.R. PAUL et al.: "Polymer blends", Band 2, 1978, Seiten 48-57, Academic Press, New York**

(73) Patentinhaber: **BAYER AG**

**W-5090 Leverkusen 1 Bayerwerk(DE)**

(72) Erfinder: **Franke, Joachim, Dr.**
**An der Ruthen 2**
**W-5000 Köln 80(DE)**
Erfinder: **Meurer, Kurt Peter, Dr.**
**Stammheimer Hauptstrasse 39**
**W-5000 Köln 80(DE)**
Erfinder: **Haas, Peter, Dr.**
**Zwengenberger Strasse 43**
**W-5657 Haan 1(DE)**
Erfinder: **Witte, Josef, Dr.**
**Haferkamp 10**
**W-5000 Köln 80(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 252 387 B1

## Beschreibung

Gegenstand der Erfindung ist die Verwendung von Poly-α-olefin/Polyurethan-Blockcopolymere (PAO/PU-Block-Copolymere), die aus gegenüber Isocyanatgruppen funktionalisierten Poly-($C_2$-$C_{10}$-α-olefinen) (im folgenden als PAO abgekürzt), vorzugsweise Polypropylen, Di- oder Polyisocyanaten oder Isocyanatprepolymeren sowie unter Mitverwendung von höhermolekularen Polyolen und/oder niedermolekularen Kettenverlängerern aufgebaut werden, als Dispergatoren und Haftvermitter zur Herstellung von Polymerblends.

Funktionalisierte PAO werden erhalten durch Pfropfung von Polyolefinen mit ungesättigten Carbonsäuren oder -anhydriden, wie z.B. Maleinsäureanhydrid oder durch oxidativen Abbau mit Luft, Sauerstoff oder Ozon erhalten. Solche Carboxy-oder Carbonsäureanhydridmodifizierte PAO sind an sich bekannt, wurden bislang aber nicht zur Herstellung von PAO/PU-Blockcopolymeren verwendet.

Hingegen sind PAO/PU-Blends und Mischungen bekannt, die nur durch physikalische Mischung, jedoch nicht durch chemische Verknüpfung zustande kommen. So werden z.B. in der DE-A 2 720 534 PU/Polyethylen- oder PU/Polypropylen-Mischungen für Isolierscheiben beschrieben.

In der DE-A 2 309 508 werden Polyurethane mit verbesserter Dauerbiegefestigkeit durch Zusatz von 2 bis 30 % Polyethylen oder Polypropylen erhalten.

In der US-A 3 670 049 werden u.a. Polyethylen und Polypropylen als Gleitmittel für PU-Prepolymere beansprucht.

In der US-A 3 272 890 werden Polyethylen- oder Polypropylen-Formmassen-Gemischemit einem Anteil von 15 bis 25 % eines thermoplastischen Polyurethanelastomeren (TPU) beschrieben.

In der JA 25 175/70 (Toray) werden Polyolefin-Mischungen mit Polykondensaten oder Polyurethanen beschrieben.

In den Patentschriften FR-A 2 163 530, GB-A 1 163 266 und GB-A 1 181 727; DE-A 2 740 711/GB-A 1 070 105 und FR-A 1 330 784 wird Polypropylen u.a. durch Zusatz von Polyurethanen modifiziert, um die Anfärbbarkeit des Polypropylens zu verbessern.

In den DE-A 2 441 645, JA 56 033 139 und JA 51 114 438 werden Polypropylen-modifizierte PU(-Prepolymere) als Schmelzkleber beschrieben.

In der US-A 3 432 451 werden Polyurethane in Gegenwart eines Polyolefins aufgebaut und als Überzüge und Lacke verwendet.

Die US-A 3 857 826 beschreibt die Herstellung eines Ethylen/Propylen-Copolymerisats mit endständigen Olt-Gruppen durch Ozonolyse eines Ethylen/Propylen/Butadien-Terpolymerisats und anschließende Reduktion des Ozonolyseprodukts mit Natriumborhydrid. Derartige Copolymerisate können mit Diisocyanaten und Kettenverlängerern umgesetzt werden.

Gegenstand der Erfindung ist die Verwendung von Poly-α-olefin/Polyurethan-Blockcopolymere (PAO/PU-Blockcopolymere), die durch Umsetzung von

A) gegenüber Isocyanaten reaktionsfahigen, funktionalisierten Poly($C_2$-$C_{10}$-α-olefinen) mit einem Gewichtsmittel-Molekulargewicht $M_w$ von 1000 bis 350 000, vorzugsweise von 2000 bis 2 000 000, insbesondere von 2000 bis 100 000,

B) mit organischen Di- oder Polyisocyanaten, modifizierten Polyisocyanaten sowie deren Isocyanatprepolymeren, und ggf.

C) sowie gegenüber Isocyanaten reaktive, Zerewitinoffaktive Wasserstoffatome enthaltenden, an sich bekannten Synthesebausteinen der Polyurethan/Polyharnstoff-Chemie, wie Polyetherpolyolen, Polyesterpolyolen, Polycarbonatpolyolen, Polylactonen, Amino-Gruppen enthaltenden modifizierten Polyolen mit einem Molekulargewicht von 400 bis 5000, sowie gegebenenfalls

D) niedermolekularen, als Kettenverlängerer fungierenden Verbindungen des Molekulargewichts 64 bis 399, z.B. organischen Di- oder Polyhydroxyverbindungen sowie di- und oligofunktionellen Aminoalkoholen oder Aminen des Molekulargewichtsbereichs 32 bis 399

nach ein- oder mehrstufigen Verfahren erhalten werden, wobei mindestens eine Verbindung C) oder D) erhalten sein muß, als Dispergatoren und Haftvermittler zur Herstellung von Polymerblends.

Be den unter A) aufgeführten, gegenüber Isocyanaten reaktionsfähigen, funktionalisierten Poly(α-alkyl)-olefinen (PAO) mit einem Molekulargewichtsmittel $M_w$ von 1000 bis 350 000, vorzugsweise 2 000 bis 200 000, insbesondere 2 000 bis 100 000, sind solche Polyolefine, insbesondere auf Polypropylen-Basis gemeint, die funktionelle Gruppen besitzen, deren Reaktion mit Isocyanatgruppen möglich ist. Eine Übersicht findet man z.B. im Houben-Weyl, Ergänzungsband 4, Seite 768 bis 784. Vorzugsweise handelt es sich bei diesen funktionalisierten PAO um Poly-(α-alkyl)-olefin-carbonsäuren, -anhydride, -alkohole und -amine. Die Olefingruppen in A) sollen dabei 2 bis 10 C-Atome, vorzugsweise 2 C-Atome und die Alkylgruppen 1 bis 8 C-Atome, vorzugsweise 1 C-Atom, aufweisen.

Funktionalisierte PAO sind im Prinzip bekannt. So können Carbonsäuregruppen enthaltende Polypropylene nach den US-Patenten 3 416 990, 3 437 550, 3 483 276 dadurch erhalten werden, daß kristallines oder amorphes Polypropylen mit einer ethylenisch ungesättigten Carbonsäure, Polycarbonsäure oder -anhydrid, -amid oder -alkylester modifiziert wird.

Beispiele für solche Säuren oder Anhydride sind Maleinsäure, Fumarsäure, Itaconsäure, Acrylsäure, Methacrylsäure, Crotonsäure, Maleinsäureanhydrid, Itaconsäureanhydrid.

Bevorzugt wird Maleinsäureanhydrid verwendet.

Ein Beispiel für ein kristallines, carboxyliertes Polypropylen-Polymer, welches in dieser Erfindung verwendet werden kann, ist Hercoprime® G, erhältlich von Hercules, Inc. Bloomington, Delaware 19899.

Ein Beispiel für ein amorphes carboxyliertes Polypropylen-Polymer ist Epolene® E 43, erhältlich von Tennessee-Eastman Company, Tennessee.

Eine weitere Methode, funktionalisierte Polyolefine zu erhalten, ist in der deutschen Patentanmeldung DE-A 36 18 378 beschrieben.

Dort wird ein Verfahren zur Herstellung von Poly-($C_2$-$C_{10}$-$\alpha$-olefin)-dicarbonsäuren mit Molekulargewichten $M_w$ von 70 000 bis 350 000, vorzugsweise von 70 000 bis 100 000 und insbesondere von 70 000 bis 80 000 angegeben, das dadurch gekennzeichnet ist, daß man Poly-($C_2$-$C_{10}$-$\alpha$-olefine) mit $M_w$ von etwa 355 000 und einer Uneinheitlichkeit von etwa 10 (Uneinheitlichkeit U = $M_w/M_n$ -1) oxidativ bei Temperaturen von 200 °C bis 300 °C behandelt und gegebenenfalls abbaut.

Beispielsweise kann in einem Extruder (ZSK 32) mit einem Länge-Durchmesserverhältnis von LD = 40/6000 g/Std. isotaktisches Polypropylen mit einem $M_w$ von 355 000, einer Uneinheitlichkeit (U = $M_w/M_n$ - 1) von 9 zudosiert, auf 250 °C bis 260 °C erhitzt und mit 1500 Nl/Std. Luft unter Druck vermischt werden, wobei nach der Zone der Luftdosierung die Zylindertemperatur des Extruders auf 210 °C gehalten wird ($M_w$ = Molekulargewicht-Gewichtsmittel; $M_n$ = Molekulargewicht-Zahlenmittel).

In der Entgasungszone tritt die überschüssige Luft aus, und die erhaltene Polypropylencarbonsäure wird an der Düse abgesponnen. Nach dieser ersten Oxidation besitzt die resultierende Polypropylencarbonsäure ein $M_w$ von etwa 113 000, einer Uneinheitlichkeit von 4 und einen Carboxylgruppengehalt von 0,7 Carboxylgruppen pro Molekül.

Dieses Produkt kann nochmals in derselben Weise oxidativ extrudiert werden, wobei die resultierende Polypropylencarbonsäure ein $M_w$ von 94 000, eine Uneinheitlichkeit von 3 und einen Carboxylgruppengehalt von 1,3 Carboxylgruppen pro Molekül hat.

Dieses Produkt kann ein drittes Mal oxidativ extrudiert werden, wobei die resultierende Polypropylencarbonsäure ein $M_w$ von 70 000, eine Uneinheitlichkeit von 4 und einen Carboxylgruppengehalt von 1,5 bis 2 Carboxylgruppen pro Molekül zeigt.

Die Bestimmung der Carboxylgruppen erfolgt jeweils durch acidimetrische Titration mit einer methanolischen Kaliumhydroxidlösung.

Der Ausdruck Nl/Std. Luft bedeutet Normliter/Stunde.

Als Drücke bei der oxidativen Extrusion sind solche von 1 bar bis 100 bar bevorzugt anwendbar.

Diese Oxidationsverfahren nach der angegebenen Patentanmeldung zu Polyolefincarbonsäuren können auch in einem Kneter bei Temperaturen von 150 °C bis 300 °C und Reaktionszeiten von 1 bis 1000 min, vorzugsweise von 10 bis 1000 min und Luft-durchsätzen von 10 bis 1000 1/h und Drücken von 1 bis 100 bar durchgeführt werden.

Ebenfalls Gegenstand der zitierten Anmeldung ist ein weiterer Verfahrensvorschlag zur Herstellung von Poly($C_2$-$C_{10}$-$\alpha$-olefin)-carbonsäuren, dadurch gekennzeichnet, daß man $C_2$-$C_{10}$-Olefine mit bekannten metallorganischen Mischkatalysatoren, beispielsweise mit Vanadium(acetylacetonat)$_3$/Al(Cl) $(C_2H_5)_2$ in bekannter Weise zu Molekulargewichten $M_w$ von etwa 50 000 bis etwa 350 000 polymerisiert und anschließend mit $CO_2$ bei Temperaturen von -50 °C bis -70 °C und einer Reaktionszeit von 6 bis 20 Stunden bei einem $CO_2$-Druck bis zu 5 bar behandelt, das Reaktionsgemisch danach mit wäßriger Säure ansäuert und die erhaltene Polyolefincarbonsäure abtrennt.

Diese PAO-Carbonsäuren oder PAO-Carbonsäureanhydride können nun direkt mit Isocyanatgruppen in Reaktion gebracht werden.

Die Reaktion von Isocyanatgruppen mit niedermolekularen Carbonsäuren oder Carbonsäureanhydriden ist im Prinzip bekannt, so z.B. bei R.L. Zapp, G.E. Serniuk, K.S. Minckler, Rubber Chem. Technol. 43, 1154 (1970); S. Motoki, T. Saito, H. Kagami, Bull. Chem. Soc. Jpn. 47, 775 (1974); C. Naegli, A. Tyabij, Helv. Chim. Acta. 17, 931 (1934) beschrieben.

Man erhält je nach der Reaktionsführung entweder Hydroxamsäureanhydride (Formel I)

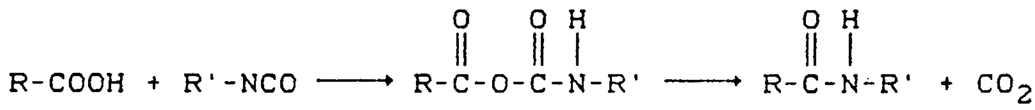

(I) (II)

oder unter $CO_2$-Austritt, Amidverknüpfung (Formel II).

Die Reaktion von funktionalisiertem PAO mit Mono- oder Polyisocyanaten oder Isocyanatprepolymeren zu Isocyanatgruppen enthaltendem PAO und die daraus resultierende Darstellung von PAO/PU-Blockcopolymeren mit den erfindungsgemäß vorteilhaft zu erzielenden Eigenschaften ist neu.

Die oben erwähnten PAO-Carbonsäuren oder PAO-Carbonsäureanhydride können aber auch zunächst durch an sich bekannte, an diesem funktionalisierten PAO allerdings neuen, organisch-chemischen Reaktionen in andere, mit Isocyanat-Gruppen reaktive Gruppen überführt werden.

Beispielsweise sei hier genannt, ohne erfindungsgemäß einschränkend zu gelten, die Überführung in Alkohol-, Amino-, Epoxid-, usw. -Gruppen.

Diese Umwandlung der Carbonsäuregruppen oder Anhydridgruppen kann entweder direkt durch Reduktion oder Umlagerung in andere, mit NCO-reaktiven Gruppen erfolgen oder durch Umsetzung der Carbonsäure- oder AnhydridGruppen mit anderen, nieder- oder höhermolekularen, mindestens bifunktionellen Verbindungen der allgemeinen Formel

$A_n$-R-$B_m$

worin

- R ein organischer Rest, insbesondere ein Alkyl-, Aralkyl- oder Aryl-Rest mit einem Molekulargewicht von 14 bis 1000 bedeutet, und
- A eine funktionelle Gruppe, die zu einer Reaktion mit Carbonsäure-Gruppen oder Anhydrid-Gruppen befähigt ist, wie z.B. Hydroxyl- oder Aminogruppen und somit zu Ester-, Amid- oder Imid-Bindungen führt,
- B eine funktionelle Gruppe, die zu einer Reaktion mit Isocyanat-Gruppen befähigt ist. Eine Übersicht findet man z.B. im Houben-Weyl E 4, Seiten 768 bis 784. Vorzugsweise handelt es sich um Hydroxy-, Amino-, Thio- und Epoxid-Gruppen.
- n $\geq 1$,
- m $\geq 1$.

Beispiele solcher Verbindungen sind Di- oder Polyole und/oder Aminoalkohole wie Ethylenglykol, Butandiol-1,4, 2,2-Dimethylpropandiol-1,3, Ethanolamin, Diethanolamin, usw.

Für eine erfolgreiche Durchführung dieser Reaktion kann es notwendig sein, die Reaktivität der Polyolefin-Carbonsäure-Gruppen zu erhöhen. Hier kommen alle in der organischen Chemie üblichen und verwendeten Aktivierungsreagenzien in Frage. Bevorzugt ist die Überführung in Carbonsäurehalogenide, besonders bevorzugt in Carbonsäurechloride.

Diese Polyolefin-Carbonsäurechloride können nach der bereits zitierten DE-A 36 18 378 erhalten werden, indem Polyolefin-Carbonsäuren mit einem $M_n$ von 1000 bis 350 000 mit Halogenierungsmitteln, vorzugsweise mit Chlorierungsmitteln, z.B. mit Thionylchlorid, gegebenenfalls in einem organischen Lösungsmittel, beispielsweise in aliphatischen, cycloaliphatischen oder aromatischen Lösungsmitteln, umgesetzt werden.

Organische Lösungsmittel sind bevorzugt halogenierte oder alkylierte aromatische Kohlenwasserstoffe wie Toluol oder Chlorbenzol.

Bei Abwesenheit der Lösungsmittel erfolgt die Halogenierung in Substanz, wobei eine Suspension der Carbonsäure im Halogenierungsmittel vorliegt.

Geeignete organische Polyisocyanate B) sind beliebige organische Verbindungen, die mindestens zwei freie Isocyanatgruppen aufweisen. Vorzugsweise werden Diisocyanate $X(NCO)_2$ eingesetzt, wobei X insbesondere einen aliphatischen Kohlenwasserstoffrest mit 4 bis 12 Kohlenstoffatomen, einen cycloaliphatischen Kohlenwasserstoffrest mit 6 bis 15 Kohlenstoffatomen, einen aromatischen Kohlenwasserstoffrest mit 6 bis 15 Kohlenstoffatomen oder einen araliphatischen Kohlenwasserstoffrest mit 7 bis 15 Kohlenstoffatomen bedeutet.

Beispiele derartiger besonders bevorzugt einzusetzender Diisocyanate sind Tetramethylendiisocyanat,

Hexamethylendiisocyanat, Dodecamethylendiisocyanat, 1,4-Diisocyanato-cyclohexan, 1-Isocyanato-3,3,5-trimethyl-5-isocyanato-methylcyclohexan, 4,4'-Methylenbis-cyclohexyldiisocyanat, 4,4'-Diisocyanato-dicyclohexylpropan-(2,2), 1,4-Diisocyanatobenzol, 2,4-Diisocyanatotoluol, 2,6-Diisocyanatotoluol, sowie deren Isomerengemische, 4,4'-Diisocyanato-diphenylmethan, p-Xylylendiisocyanat, sowie $\alpha,\alpha,\alpha',\alpha'$-Tetramethyl-m- oder p-Xylylendiisocyanat, aus diesen Verbindungen bestehende Gemische, da hieraus thermoplastisch verarbeitbare Blockcopolymere entstehen.

Es ist selbstverständlich auch möglich, die in der Polyurethanchemie an sich bekannten höherfunktionellen Polyisocyanate oder auch an sich bekannte modifizierte, beispielsweise Carbodiimidgruppen, Allophanatgruppen, Isocyanuratgruppen, Urethangruppen und/oder Biuretgruppen aufweisende Polyisocyanate anteilig oder allein (mit)zuverwenden.

Bei den für die Herstellung der PAO/PU-Blockcopolymere als Ausgangsmaterial C) geeigneten, gegenüber Isocyanaten rekativen, Zerewitinoff-aktive Wasserstoffatome enthaltende Polyole handelt es sich um an sich bekannte Synthesebausteine der Polyurethan/Polyharnstoffchemie wie Polyetherpolyole, Polyesterpolyole, Polycarbonatpolyole, Polylactone, Amino-Gruppen enthaltene modifizierte Polyole mit einem Molgewicht von 400 bis 5000, wobei auch hier Bifunktionalität besonders bevorzugt ist.

Bei den für die PAO/PU-Blockcopolymere als Ausgangsmaterial D) geeigneten, als Kettenverlängerer fungierenden Verbindungen, sind insbesondere organische Polyhydroxyverbindungen mit einem Molekulargewicht von 62 bis 399 einsetzbar.

Es handelt sich hierbei um besonders bevorzugt bifunktionelle Kettenverlängerer des Molekulargewichtsbereichs von 62 bis 399, vorzugsweise 62 bis 250, während 3-funktionelle Kettenverlängerer weniger bevorzugt sind. Sie können jedoch in untergeordneten Mengen mitverwendet werden.

Hierzu gehören beispielsweise einfache, mehrwertige Alkohole wie Ethylenglykol, Propylenglykol, Propandiol(1,3), Butandiol-1,4, Hexandiol-1,6, Trimethylolpropan oder Glycerin. Auch niedermolekulare Polyesterdiole wie z.B. Adipinsäure-bis-(hydroxyethyl)-ester oder niedermolekulare, Ethergruppen aufweisende Diole wie z.B. Diethylenglykol, Triethylenglykol, Tetraethylenglykol, Dipropylenglykol, Tripropylenglykol oder Tetrapropylenglykol sowie di- oder oligofunktionelle Amine des Molekulargewichtsbereiches von 32 bis 399 als Kettenverlängerer und Vernetzer.

Verbindungen vom Typ C) und D) sind ausführlich in der DE-A 2 832 253, Seite 11 bis 20 aufgeführt.

Rhein und Ingham beschreiben (Polym. Prep. Amer. Chem. Soc. Div. Polym. Chem. 15 (1974) 60-65 und Polymer 16, (1975), 799-804) die Herstellung von Prepolymeren, Ethylen-Propylen-Copolymeren oder ataktischen Propylen-Homopolymeren durch den gezielten nachträglichen Einbau von Doppelbindungen und anschließende Ozonolyse.

Die entstehenden Endgruppen werden mit Alkylaluminiumhydrid-Reagenzien in OH-Gruppen überführt. Diese OH-funktionellen Prepolymere können anschließend mit Diisocyanaten vernetzt werden.

Diese Produkte unterscheiden sich von den PAO/PU-Blockcopolymeren dadurch, daß die anteilige Mitverwendung von organischen Polyhydroxylverbindungen mit einem Molekulargewicht von 62 bis 5000 und/oder die Verwendung von alkoholischen, aminischen oder hydrazinischen Kettenverlängern oder Vernetzern nicht gegeben ist. Es kann daher bei den von Rhein und Ingham beschriebenen Produkten nicht zu einer Ausbildung längerer und signifikanter PU-Segmente oder -Domänen kommen, welche jedoch für eine Verträglichkeit mit Polyurethanen entscheidend sind.

Gerade das ist aber wesentlich, um die gewünschte Eigenschaften der verträglichmachenden PAO/PU-Blockcopolymeren zu erreichen.

Zudem ist dieser, von Rhein et al beschriebene Weg, technich nicht gangbar, da sich die Metallhydride nach der Reaktion schlecht abtrennen lassen, die Aktivität gegenüber Isocyanaten stören würden und zudem teuer sind.

Durch den Verzicht auf die als flexibilisierende Weichsegmente dienenden Polyole, sei es in Form der Segmente nach C) oder in Form von NCO-Prepolymeren B) auf Basis höhermolekularer Polyole, werden nach dem von Rhein und Ingham beschriebenen Produkte, harte, vernetzte, nicht schmelzende und thermoplastisch nicht verformbare und nicht verarbeitbare Produkte erhalten.

Gerade aber die thermoplastischen Eigenschaften der PAO/PU-Blockcopolymeren sind für die Verwendung als Dispergatoren und Haftvermittler zur Herstellung von Polymerblends wesentlich.

Das Verfahren zur Herstellung von Poly-$\alpha$=olefin/Polyurethan-Blockcopolymeren, besteht darin, daß

A) gegenüber Isocyanaten reaktionsfähige, funktionalisierte Poly($C_2$-$C_{10}$-$\alpha$-olefine) mit einem $M_w$ von 1000 bis 350 000 mit

B) organischen Di- oder Polyisocyanaten, modifizierten Polyisocyanaten sowie deren Isocyanatprepolymeren auf Basis höhermolekularer Polyole

C) sowie gegebenenfalls gegenüber Isocyanaten reaktiven, Zerewitinoff-aktive Wasserstoffatome enthaltenden, an sich bekannten Synthesebausteine der Polyurethan/Polyharnstoff-Chemie wie Polyetherpolyolen, Polyesterpolyolen, Polycarbonatpolyolen, Polylactonen, Amino-Gruppen enthaltenen modifizierten Polyolen mit einem Molekulargewicht von 400 bis 5000;

D) sowie gegebenenfalls niedermolekularen als Kettenverlängerer fungierenden Verbindungen des Molekulargewichts 62 bis 399, z.B. organischen Di-oder Polyhydroxyverbindungen sowie di- und oligofunktionellen Aminen des Molekulargewichtsbereichs 32 bis 399 als Kettenverlängerungsmittel bzw. Vernetzer,

gegebenenfalls stufenweise umgesetzt werden, wobei mindestens eine Verbindung c) oder D) mit umgesetzt wird.

Eine der Ausführungsformen des Verfahrens zur Herstellung von PAO/PU-Blockcopolymeren ist ein Verfahren, bei dem die funktionellen PAO A zunächst mit den Di- oder Polyisocyanaten oder mit den Isocyanatprepolymeren B) in der Schmelze oder in Gegenwart eines inerten organischen Lösungsmittels (wie z.B. Aceton, N-Methylpyrrolidon, Toluol, Chlorbenzol, Dichlorbenzol, usw.) zu einem noch freie Isocyanatgruppen enthaltende Prepolymere umgesetzt werden, in einem zweiten Arbeitsgang die restlichen freien NCO-Gruppen ganz oder teilweise mit den organischen Polyhydroxyverbindungen C) mit einem Molekulargewicht von 400 bis 5000 umgesetzt und gegebenenfalls in einem dritten Arbeitsgang die restlichen freien Isocyanatgruppen mit organischen Di-oder Polyhydroxyverbindungen D) mit einem Molekulargewicht von 64 bis 399 und/oder aminischen oder hydrazinischen Kettenverlängerungsmitteln bzw. Vernetzern des Molekulargewichtsbereichs von 32 bis 399 umgesetzt werden.

Eine weitere Ausführungsform des Verfahrens zur Herstellung von PAO/PU-Blockcopolymeren ist dadurch gekennzeichnet, daß die funktionellen PAO A zunächst mit den Di- oder Polyisocyanaten oder mit den Isocyanatprepolymeren B) in der Schmelze oder in Gegenwart eines inerten organischen Lösungsmittels wie z.B. Aceton, N-Methylpyrrolidon, Toluol, Chlorbenzol, usw., zu einem noch freie Isocyanatgruppen enthaltenden Prepolymer umgesetzt werden und in einem zweiten Arbeitsgang die restlichen freien NCO-Gruppen vollständig mit einem Gemisch aus den organischen Polyhydroxyverbindungen C) mit einem Molekulargewicht von 400 bis 5000 und den organischen Di- oder Polyhydroxyverbindungen D) mit einem Molekulargewicht von 64 bis 399 und/oder aminischen oder hydrazinischen Kettenverlängerungsmitteln bzw. Vernetzern des Molekulargewichtsbereichs von 32 bis 399 umgesetzt werden.

Ein weiteres Verfahren zur Herstellung von PAO/PU-Blockcopolymeren, besteht darin, daß die Di- oder Polyisocyanate B) zunächst in der Schmelze oder in Gegenwart eines inerten organischen Lösungsmittels wie z.B. Aceton, N-Methylpyrrolidon, Toluol, Chlorbenzol usw. mit den organischen Polyhydroxyverbindungen C) mit einem Molekulargewicht von 400 bis 5000 zu einem noch freie NCO-Gruppen enthaltendem Prepolymer umgesetzt werden und in einem zweiten Arbeitsgang die restlichen freien NCO-Gruppen ganz oder teilweise mit den funktionalisierten PAO a) umgesetzt werden und gegebenenfalls in einem dritten Arbeitsgang die restlichen freien Isocyanatgruppen mit organischen Di- oder Polyhydroxyverbindungen D) mit einem Molekulargewicht von 62 bis 399 und/oder aminischen oder hydrazinischen Kettenverlängerungsmitteln bzw. Vernetzern des Molekulargewichtsbereichs von 32 bis 399 umgesetzt werden.

In dem Verfahren zur Herstellung von PAO/PU-Blockcopolymeren können auch zunächst funktionelle Polypropylen-Carbonsäuren in die Polypropylen-Carbonsäurehalogenide, besonders bevorzugt in die Polypropylen-Carbonsäurechloride (wie in der deutschen Patentanmeldung P 36 18 378.4), überführt werden und schließlich in der Schmelze oder in einem inerten organischen Lösungsmittel wie z.B. Toluol, mit aliphatischen Diolen, bevorzugt Ethylenglykol, Butandiol oder Hexandiol, zu einem Hydroxyalkyl-Polypropylen-Carbonsäureester als funktionelle PAO umgesetzt werden.

Ebenfalls erhält man bevorzugt hydroxyfunktionelle Polypropylen-Carbonsäurederivate, indem funktionelle Polypropylen-Carbonsäureanhydride in einem inerten Lösungsmittel, welches vorzugsweise mit Wasser ein Azeotrop bildet, mit Aminoalkoholen, bevorzugt Ethanolamin, unter azeotroper Entfernung entstehenden Wassers zu Hydroxyalkyl-Polypropylen-Carbonsäurediimiden umgesetzt werder.

Diese hydroxyfunktionellen Polypropylen-Carbonsäurederivate werden dann in einem inerten Lösungsmittel bei 50 bis 150 °C, bevorzugt bei 70 bis 120 °C oder in der Schmelze bei 100 bis 200 °C, bevorzugt bei 130 bis 170 °C, mit Isocyanaten, bevorzugt Diphenylmethandiisocyanat, Naphthylendiisocyanat, Toluylendiisocyanat, Isophorondiisocyanat oder Hexamethylendiisocyanat, besonders bevorzugt Diphenylmethan-4,4-diisocyanat, zu NCO-Prepolymeren umgesetzt und anschließend mit einer der vorhandenen NCO-Menge etwa äquivalenten Menge eines Kettenverlängerers wie Butandiol, Hexandiol, besonders bevorzugt Butandiol und/oder höhermolekularen Polyhydroxylverbindungen C) umgesetzt.

Die Mischung kann anschließend noch so lange bei der angegebenen Temperatur gehalten werden, bis analytisch kein freies NCO mehr nachweisbar ist.

Die oben erwähnten NCO-Prepolymeren aus den hydroxyfunktionellen PP-Carbonsäureestern oder -imiden können auch in einem ebenfalls bevorzugten Verfahren zunächst mit organischen Polyhydroxyverbindungen mit einem Molekulargewicht von 400 bis 5000, bevorzugt mit Polyestern-, Polypropylenglycolether oder Poly(tetramethylen)glykolether mit einem Molekulargewicht von 1000 bis 3000 in solch einer

Menge umgesetzt werden, daß nach Beendigung dieser Reaktion noch freie Isocyanatgruppen in der Mischung vorhanden sind. Diese werden alsdann, wie oben beschrieben, mit einer etwa äquivalenten Menge eines Kettenverlängers in Reaktion gebracht. Bei den bevorzugt verwendeten Polyestern handelt es sich um solche aliphatischen oder aliphatisch-aromatischen linearen Polyestern aus Dicarbonsäuren und Diolen, wie sie z.B. für thermoplastische Polyurethane üblicherweise verwendet werden.

Bevorzugt ist weiterhin ein Verfahren zur Herstellung der funktionalisierten PAO-NCO-Prepolymeren, indem die PAO-Carbonsäuren oder -Anhydride (bevorzugt Polypropylen-Carbonsäure oder -Anhydride), direkt in einem hochsiedenden Lösungsmittel oder bevorzugt in der Schmelze bei einer Temperatur, die oberhalb der PAO-, bevorzugt Polypropylen-Carbonsäure oder des -Anhydrids (also größer als 150°C liegen) aber, um unerwünschte Nebenreaktionen zu verhindern, nicht wesentlich über dem Schmelzpunkt, also unter etwa 200°C liegen, mit den aromatischen oder aliphatischen Isocyanaten, bevorzugt Diphenylmethandiisocyanat oder Toluylendiisocyanat oder ihren NCO-Prepolymeren, in Reaktion gebracht werden. Bei der Reaktion entstehen nach Formel (II) unter $CO_2$-Austritt Amid-Bindungen des Polypropylen-Restes an das Diisocyanat. Nach Beendigung der $CO_2$-Entwicklung kann nach einem der beiden oben erwähnten Varianten weiter verfahren werden, Der besondere Vorteil dieser Reaktionsführung liegt in der Einfachheit der Durchführung und in der Einsparung der vorgeschalteten Stufen zur Herstellung der hydroxyfunktionellen PAO-(bevorzugt PP)-Carbonsäureester oder -imide.

Man erhält bei diesen Verfahren weiße bis leicht gelbliche kristalline oder amorphe Feststoffe, die bei ca. 150 bis 200°C unzersetzt schmelzen, Thermoanalytische Untersuchungen zeigen das Vorhandensein von nicht gestörten Kristallisationen der PAO- und PU-Segmente. In der IR-Spektroskopie erkennt man sowohl die Signale für PAO als auch die charakteristischen Absorptionsbanden für Urethan- und Amid-Bindungen. Nach der Methode der entmischenden Flüssigkeiten (Zitat: R. Kuhn, Makromol. Chem. 181, 725 (1980)) läßt sich ein erheblicher Anteil an Blockcopolymerisaten feststellen und nur unbedeutende Mengen an reinem PAO (Polypropylen) bzw. reinem PU isolieren.

Die Umsetzungen erfolgen bei einer Temperatur von 20 bis 200°C, bevorzugt von 50 bis 190°C.

Die üblichen, für Isocyanat-Reaktionen bekannten und verwendeten Katalysatoren können gegebenenfalls in Mengen von 0,1 bis 10 % bezogen auf die Gesamtmenge zugegeben werden.

Die beschriebenen Reaktionen sind beendet, wenn sich analytisch (IR) keine freien Isocyanatgruppen mehr nachweisen lassen.

Die Isolierung der gegebenenfalls gelösten PO/PU-Blockcopolymeren erfolgt nach bekannten Verfahren, entweder dem Entfernen des Lösungsmittels, vorzugsweise unter Anwendung von Vakuum bei erhöhten Temperaturen oder dem Fällen der Lösung durch Zugabe von oder in ein Lösungsmittel, in dem das Polymer unlöslich ist.

Zur Vervollständigung der Reaktion und zur Verbesserung der mechanischen Eigenschaften kann es sinnvoll sein, die erfindungsgemäßen PO/PU-Blockcopolymeren bei einer Temperatur von 50 bis 150°C, vorzugsweise von 70 bis 120°C für eine Zeit von 0,1 bis 24 Stunden, vorzugsweise von 1 bis 5 Stunden zu tempern.

Die PAO/PU-Blockcopolymere lassen sich nach Reinigung und Trocknung sowie gegebenenfalls einer Temperung in den üblichen Mischaggregaten wie Walzen, Knetern, Ein- und Mehrwellenextrudern sowie Brabendern zu Formkörpern verarbeiten.

Die Verarbeitungstemperatur sollte 250°C vorzugsweise nicht überschreiten.

Die PAO/PU-Blockcopolymeren können auch in beliebigem Verhältnis mit thermoplastischen Polyurethanen, z.B. Desmopan® der Bayer AG als auch mit isotaktischen und/oder ataktischen Polypropylenen z.B. Vestolen® der Hüls AG, gemischt werden.

Hier hönnen die PAO/PU-Blockcopolymere eine besonders interessante technische Verwendung, beispielsweise als Haftvermittler, Kompatibilitätsverbesserer oder Dispergatoren in ansonsten unverträglichen oder schlecht verträglichen thermoplastischen Polymermischungen, wie z,B, Polypropylen/thermoplastische Polyurethanelastomer-Blends finden.

Der technologische Fortschritt, der sich durch die Verwendung der PAO/PU-Blockcopolymeren erreichen läßt, zeigt sich durch die Messung der Torsionstrennfestigkeit zwischen Polypropylen- und Polyurethan-Sandwichplatten. Verwendet man als Haftschicht zwischen diesen Platten eine Mischung aus Polypropylen (PP) und PU, so erhält man in diesem Vergleichsversuch eine Torsionstrennfestigkeit von 8 MPa. Bei Zusatz von 10 % der PO/PU-Blockcopolymeren in die Haftschicht erhöht sich die Torsionstrennfestigkeit auf 13 MPa. Zum Vergleich beträgt die Torsionstrennfestigkeit zwischen zwei Polypropylen-Platten 4 MPa und zwischen 2 PU-Platten 16 MPa. Hierbei wird so vorgegangen, daß zwei Platten der reinen Materialien mit einer Mischung von PU/PP (1:1) durch Aufschmelzen verbunden werden, während im Vergleichsversuch das Blockcopolymer gemäß Beispiel 4 zu 10 % der Mischung an PP/PU als Polymerdispergator zugefügt und dann durch Tempern bei 240°C in 15 min verbunden wurde.

Die Torsionstrennfestigkeit durch das PAO/PU-Blockcopolymere wird durch ein wesentlich gesteigertes Verträglichmachen der Werkstoffe PP und PU bewiesen, da die Festigkeit zwischen diesen Polymeren um 60 % angehoben wird.

Die Wirkung der PAO/PU-Blockcopolymeren als Polymerdispergator zeigt sich auch bei der lichtmikroskopischen Betrachtung von PP/PU-Blends. Während bei diesen Blends ohne Verwendung von Polymerdispergatoren eine unregelmäßige, aus mehr oder weniger großen Einheiten bestehende Verteilung beobachtet wird, läßt sich durch Zusatz von 10 % der PAO/PU-Blockcopolymeren eine Vereinheitlichung und Verkleinerung der Phasen feststellen.

## Beispiele

### Beispiel 1

Herstellung der PP-Carbonsäuren (nach De-A 36 18 378.)

In einem Extruder (ZSK 32) mit einem Längs-Durchmesser-Verhältnis LD = 40 werden 6000 g/h isotaktisches Polypropylen mit einem mittleren Molekulargewicht von 340 000 eindosiert, auf 250 bis 260 ° C erhitzt und mit 1500 Nl/h Luft unter Druck vermischt.

Nach der Zone zur Luftdosierung wird die Zylindertemperatur des Extruders auf 210 ° C gehalten. In der Entgasungszone tritt die überschüssige Luft aus, und das abgebaute Polypropylen wird an der Düse abgesponnen.

Man erhält carboxyfunktionalisiertes Polypropylen mit einem Molekulargewicht von ca. 80 000 und einer Funktionalität von ca. 1. Die Säurezahl beträgt demnach ca. 0,7 g KOH/g Substanz.

### Beispiel 2

Herstellung der hydroxyfunktionellen PP-Carbonsäureester

100 g thermisch-oxidativ-abgebautes isotaktisches Polypropylen mit einer Säurezahl von ca. 0,7 mg KOH/g Substanz wird in 200 ml abs. Toluol gelöst und mit 20 g (Überschuß) Thionylchlorid 2 Stunden refluxiert. Anschließend wird unverbrauchtes Thionylchlorid im Vakuum abdestilliert. Die ebenfalls mitentfernte Toluol-Menge wird zugegeben und das Säurechlorid mit 20 g Ethylenglykol (Überschuß) versetzt. Nach weiteren 3 Stunden bei Rückfluß wird das Produkt in einem Überschuß Methanol gefällt, abgesaugt, mit Methanol gewaschen und getrocknet.

### Beispiel 3

Herstellung des Bis(hydroxyimids) von Epolene® E 43 (Hersteller: Tennessee-Eastman Comp., Tennessee)

45 g (0,01) Epolene® E-43 und 1,22 g (0,02) Ethanolamin werden in 100 ml Toluol 2 Stunden am Wasserabscheider refluxiert. Anschließend wird das Produkt in Methanol gefüllt, abgesaugt, gewaschen und getrocknet.

OH-Zahl = 24 mg KOH/g Substanz (theor. 22,5).

### Beispiel 4

Herstellung der PAO/PU-Blockcopolymere

80 g hydroxyfunktionelles Polypropylen gemäß Beispiel 2 werden in Toluol gelöst und mit 25 g Diphenylmethandiisocyanat (MDI) umgesetzt. Nach 2 Stunden bei 80 ° C wird langsam die stöchiometrische Menge Butandiol-1,4 langsam zugegeben und 12 Stunden bei 80 ° C weiter gerührt bis kein freies Isocyanat mehr nachweisbar war. Das Produkt wurde in Methanol gefällt, abgesaugt, gewaschen und getrocknet.

### Beispiel 5

Die hydroxyfunktionellen PP-Carbonsäureester oder -imide nach Beispiel 2 oder 3 werden in Toluol gelöst und mit der für die beabsichtigte Menge PU-Anteil berechnete Menge Toluylendiisocyanat (Toluylen-2,4-diisocyanat) umgesetzt (NCO/OH-Verhältnis = 100/1). Nach 2 Stunden bei 80 ° C wird langsam die

Hälfte der stöchiometrisch dem Gehalt an freien Isocyanat-Gruppen entsprechende Menge eines Polyesters aus Adipinsäure und Hexandiol (OH-Zahl 56, Molekulargewicht 2000) zugegeben. Nach 2 Stunden bei 80 °C wird langsam die dem Rest an freien Isocyanatgruppen entsprechende Menge Hexandiol-1,6 langsam zugegeben und 12 Stunden bei 80 °C weitergerührt, bis kein freies Isocyanat mehr nachweisbar ist. Das Produkt wird in Methanol gefällt, abgesaugt, gewaschen und getrocknet.

Beispiel 6

100 g der Polypropylen-Carbonsäure laut Beispiel 1 mit einer Säurezahl von 0,7 werden unter Stickstoff bei 150 °C geschmolzen. Dann wird langsam bei dieser Temperatur 25 g MDI zugegeben. Man beobachtet eine Gasentwicklung ($CO_2$), die nach ca. 15 min wieder abklingt. Nach weiteren 30 min werden 112 g eines Polyesters aus Adipinsäure und Butandiol (OH-Zahl 50 (mg KOH/g Substanz) zugegeben und weitere 2 Stunden bei 150 °C gerührt. Anschließend werden zu diesem Polypropylen-Blöcke enthaltenden NCO-Prepolymer 4,5 g Butandiol gegeben, rasch verrührt und die Mischung in eine Teflon-Wanne gegossen und anschließend bei 80 °C 2 Stunden getempert.

Beispiel 7

450 g (0,1) Epolene® E-43 werden bei 160 °C geschmolzen und langsam mit 34,8 g (0,2) 2,4-Toluylen-diisocyanat versetzt. Man beobachtet $CO_2$-Entwicklung, die langsam abklingt. Nach 30 min werden 9 g Butandiol zugegeben und schnell verrührt Das Produkt erstarrt und wird anschließend bei 80 °C 2 Stunden getempert.

Beispiel 8

Herstellung einer Polypropylen-carbonsäure durch thermische Oxidation in einem Autoklaven.

15000 g isotaktisches Polypropylen ($M_w$ = 340 000) werden in einem 45 l-Autoklaven gegeben. Bei 220 °C werden 600 l Luft unter Druck (1,5 bar) zugegeben. Die Mischung wird 12 Stunden gerührt. Carboxy-funktionalisiertes Polypropylen mit $M_w$ von etwa 2000 und einer Funktionalität 2 bis 2,5 werden erhalten.

Beispiel 9

1050 g der Polypropylen-carbonsäure gemäß Beispiel 10 werden unter Stickstoff bei 150 °C geschmolzen. 323 g Methandiphenyldiisocyanat werden bei dieser Temperatur unter Gasentwicklung ($CO_2$) zugegeben. Nach etwa 2 Stunden werden 1627 g eines Polyesters aus Adipinsäure und Butandiol (Mw = 2250) zugegeben, anschließend wird 10 Minuten bei 160 bis 170 °C gerührt. Ein Anstieg der Viskosität wurde beobachtet. Das Produkt wurde in eine Teflonpfanne gegossen und 2 Stunden bei 120 °C gehalten.

Beispiel 10

Abmischung der PAO/PU-Blockcopolymeren mit Vestolen® 5200 (Hüls AG)und/oder Desmopan® (Bayer AG Leverkusen)

Plastograph der Brabender OHG, Duisburg Modell 82 II 00 Nr. 179535

| Arbeitsweise: | |
|---|---|
| Temperatur<br>Menge:<br>Kompoundierzeit<br>U/min | = 240 °C (± 5 °C)<br>= 50 g<br>= 15 Min<br>= 25 |
| Die fertig kompondierten Proben werden mit einem Spatel in noch heißem, weichen Zustand abgenommen und 1 Stunde bei 130 °C im Vakuum getrocknet. | |

Die Proben zeigen eine Vereinheitlichung und Verkleinerung der Phasen.

Beispiel 11

Messung der Torsionstrennfestigkeit

Sandwichproben aus PU (Desmopan 359® der Bayer AG) und PP (Vestolen® 5200) werden mit einer Zwischenfolie (Dicke: 100-200 µm) durch 15 min. Pressen bei 240 ° C in einer Heizpresse hergestellt.

Wenn die Zwischenfolie aus einem PU/PP-Blend (Gewichtsverhältnis 1:1) besteht, wird eine Trennfestigkeit von 8 MPa gemessen. Wenn zu dem PU/PP-Blend für die Zwischenfolie 10 % PP/PU-Blockcopolymer laut Beispiel 4 gegeben werden, erhält man eine Torsionstrennfestigkeit von 13 MPa.

Zum Vergleich: Die Festigkeit einer Sandwichplatte aus zwei gleichartigen Desmopan®-Platten (thermoplastisches PU-Elastomer der Bayer AG - D 5090 Leverkusen) beträgt etwa 16 MPa aus zwei gleichartigen Vestolen®-Platten beträgt 4 MPa.

## Patentansprüche

**1.** Verwendung von Poly-α-olefin/Polyurethan-Blockcopolymere (PAO/PU), die aus
A) gegenüber Isocyanaten reaktionsfähigen, funktionalisierten Poly($C_2$-$C_{10}$-α-alkyl-olefinen) mit einem $M_w$ von 1000 bis 350 000,
B) organischen Di- oder Polyisocyanaten oder modifizierten Polyisocyanaten sowie Isocyanatprepolymeren
sowie gegebenenfalls
C) gegenüber Isocyanaten reaktiven Zerewitinoffaktive Wasserstoffatome enthaltenden, an sich bekannten Synthesebausteinen der Polyurethan/Polyharnstoff-Chemie
sowie gegebenenfalls
D) niedermolekularen als Kettenverlängerer fungierenden Verbindungen des Molekulargewichts 62 bis 399

**2.** Verwendung nach Anspruch 1, dadurch gekennzeichnet, daß die Komponente B) die Funktionalität 2 besitzt.

**3.** Verwendung nach Anspruch 1 und 2, dadurch gekennzeichnet, daß als Komponente C) Polyetherpolyole, Polyesterpolyole, Polycarbonatpolyole, Polylactone, Aminogruppen enthaltene modifizierte, besonders bevorzugt difunktionelle, Polyole mit einem Molekulargewicht von 400 bis 5000 eingesetzt werden.

**4.** Verwendung nach Anspruch 1 bis 3, dadurch gekennzeichnet, daß als Komponente D) organische Di- oder Polyhydroxyverbindungen sowie di- und oligofunktionelle Amine des Molgewichtsbereichs 32 bis 399 als Kettenverlängerungsmittel bzw. Vernetzer eingesetzt werden. hergestellt werden, wobei mindestens eine Verbindung C) oder D) verwendet werden, als Dispergatoren und Haftvermittler zur Herstellung von Polymerblends.

**5.** Verwendung nach Anspruch 1 bis 4, dadurch gekennzeichnet, daß es sich bei den funktionellen PAO mit einem Molekulargewichtsmittel $M_w$ von 1000 bis 350 000 um funktionelle Polypropylene handelt.

**6.** Verwendung nach Anspruch 1 bis 4, dadurch gekennzeichnet, daß es sich bei den funktionellen PAO mit einem $M_w$ von 1000 bis 350 000 um carboxylgruppenhaltige Polypropylene handelt.

**7.** Verwendung nach Anspruch 1 bis 4, dadurch gekennzeichnet, daß es sich bei den funktionellen PAO mit einem $M_w$ von 1000 bis 350 000 um carbonsäureanhydridgruppenhaltige Polypropylene handelt.

**8.** Verwendung nach Anspruch 1 bis 4, dadurch gekennzeichnet, daß es sich bei den funktionellen PAO mit einem $M_w$ von 1000 bis 350 000 um hydroxyfunktionelle Polypropylen-Carbonsäureester handelt.

**9.** Verwendung nach Anspruch 1 bis 4, dadurch gekennzeichnet, daß es sich bei den funktionellen PAO mit einem $M_w$ von 1000 bis 350 000 um hydroxyfunktionelle Polypropylen-Carbonsäureimiden handelt.

**10.** Verwendung nach einem der Ansprüche 1 - 9, dadurch gekennzeichnet, daß Polymerblends aus Poly-olefinen, bevorzugt Polypropylen und PU-Thermoplasten unter Zusatz von 0,1 bis 20 Gew.-%, bevorzugt 0,1 bis 10 Gew.-% an PAO/PU-Blockpolymeren hergestellt werden.

**Claims**

1. The use of poly-α-olefin/polyurethane block copolymers (PAO/PU) produced from
   A) isocyanate-reactive, functionalized poly($C_{2-10}$-α-alkyl-olefins) having an $M_w$ of 1,000 to 350,000,
   B) organic di- or polyisocyanates or modified polyisocyanates and isocyanate prepolymers
   and optionally
   C) isocyanate-reactive synthesis units containing zerewitinoff-active hydrogen atoms of the type known per se in polyurethane/polyurea chemistry
   and optionally
   D) low molecular weight compounds having a molecular weight of 62 to 399 acting as chain-extending agents,

   at least one compound C) or D) being used,
   as dispersants or coupling agents for the production of polymer blends.

2. The use claimed in claim 1, characterized in that component B) has a functionality of 2.

3. The use claimed in claims 1 and 2, characterized in that polyether polyols, polyester polyols, polycarbonate polyols, polylactones, aminofunctional modified, preferably difunctional polyols having a molecular weight of 400 to 5,000 are used as component C).

4. The use claimed in claims 1 to 3, characterized in that organic di- or polyhydroxy compounds and di- and oligofunctional amines having a molecular weight of 32 to 399 as chain-extending or crosslinking agents are used as component D).

5. The use claimed in claims 1 to 4, characterized in that the functional PAOs having an average molecular weight $M_w$ of 1,000 to 350,000 are functional polypropylenes.

6. The use claimed in claims 1 to 4, characterized in that the functional PAOs having an $M_w$ of 1,000 to 350,000 are carboxyl-functional polypropylenes.

7. The use claimed in claims 1 to 4, characterized in that the functional PAOs having an $M_w$ of 1,000 to 350,000 are polypropylenes containing carboxylic anhydride groups.

8. The use claimed in claims 1 to 4, characterized in that the functional PAOs having an $M_w$ of 1,000 to 350,000 are hydroxyfunctional polypropylene carboxylic acid esters.

9. The use claimed in claims 1 to 4, characterized in that the functional PAOs having an $M_w$ of 1,000 to 350,000 are hydroxyfunctional polypropylene carboxylic acid imides.

10. The use claimed in any of claims 1 to 9, characterized in that polymer blends are produced from polyolefins, preferably polypropylene, and PU thermoplastics with addition of 0.1 to 20% by weight and preferably 0.1 to 10% by weight PAO/PU block polymers.

**Revendications**

1. Utilisation de copolymères séquencés de poly-α-oléfine/polyuréthanne (PAO/PU), fabriqués à partir de
   A) des poly($C_2$-$C_{10}$-α-alkyl-oléfines) fonctionnalisées, capable de réaction vis-à-vis des isocyanates, d'une $M_w$ de 1000 à 350.000,
   B) des di- ou des polyisocyanates organiques ou des polyisocyanates modifiés ainsi que des prépolymères d'isocyanates
   ainsi qu'éventuellement
   C) des éléments constitutifs de la chimie des polyuréthannes connus en soi, réactifs vis-à-vis des isocyanates et contenant des atomes d'hydrogène actifs selon Zerewitinoff
   ainsi qu'éventuellement
   D) des composés de faible poids moléculaire de 62 à 399, agissant comme agents d'allongement

de chaîne,
au moins un composé C) ou D) étant utilisé, comme agents de dispersion et agents d'adhérence dans la fabrication de compositions de polymères.

**2.** Utilisation selon la revendication 1, caractérisée en ce que le composant B) possède la fonctionnalité 2.

**3.** Utilisation selon les revendications 1 et 2, caractérisée en ce que l'on emploie comme composant C) des polyétherpolyols, des polyesterpolyols, des polycarbonatepolyols, des polylactones, des polyols modifiés, de préférence bifonctionnels, contenant des groupes amino, de poids moléculaires de 400 à 5000.

**4.** Utilisation selon les revendications 1 à 3, caractérisée en ce que l'on emploie comme composant D) des composés organiques di- ou polyhydroxylés ainsi que des amines di- et oligofonctionnelles de poids moléculaire de 32 à 399 comme agents d'allongement de chaîne ou réticulants.

**5.** Utilisation selon les revendications 1 à 4, caractérisée en ce que les PAO fonctionnelles d'une moyenne de poids moléculaire $M_w$ de 1000 à 350.000 sont des polypropylènes fonctionnels.

**6.** Utilisation selon les revendications 1 à 4, caractérisée en ce que les PAO fonctionnelles d'une $M_w$ de 1000 à 350.000 sont des polypropylènes contenant des groupes carboxyle.

**7.** Utilisation selon les revendications 1 à 4, caractérisée en ce que les PAO fonctionnelles d'une $M_w$ de 1000 à 350.000 sont des polypropylènes contenant des groupes anhydride carboxylique.

**8.** Utilisation selon les revendications 1 à 4, caractérisée en ce que les PAO fonctionnelles d'une $M_w$ de 1000 à 350.000 sont des esters hydroxy-fonctionnels d'acide polypropylène-carboxylique.

**9.** Utilisation selon les revendications 1 à 4, caractérisée en ce que les PAO fonctionnelles d'une $M_w$ de 1000 à 350.000 sont des imides d'acide polypropylène-carboxylique.

**10.** Utilisation selon l'une des revendications 1 à 9, caractérisée en ce qu'on fabrique des compositions de polymères à base de polyoléfines, de préférence du polypropylène et des thermoplastes de PU en ajoutant 0,1 à 20% en poids, de préférence 0,1 à 10% en poids de copolymères séquencés de PAO/PU.